# EUROPEAN PATENT APPLICATION

(11) **EP 4 776 402 A1**
(43) Date of publication of application: **15.07.2026**
(21) Application number: 26151064.8
(22) Date of filing: 09.01.2026
(51) Int. Cl.: H01M 50/224, H01M 50/244, H01M 50/247, H01M 50/296, H01M 50/55

(54) **APPARATUS, SYSTEM, AND METHOD FOR ALIGNING BATTERY PACKS WITH ELECTRICAL CONTACTS IN DEVICES**

(30) Priority: 09.01.2025 US 202519014597
(71) Applicant: Meta Platforms Technologies, LLC, Menlo Park, CA 94025 (US)
(72) Inventor: SPARE, Bradley, Menlo Park, 94025 (US); LICHT, Rachel Blackburn, Menlo Park, 94025 (US); TAN, Hao, Menlo Park, 94025 (US); HOWARD, Zachary Ian, Menlo Park, 94025 (US); BOKIDES, Eric Anthony, Menlo Park, 94025 (US)
(74) Representative: Murgitroyd & Company

(57) **Abstract**

An apparatus may comprise (1) a battery pack dimensioned for installation in a device, (2) a set of electrical contacts coupled to the battery pack, and (3) a plate that is (A) coupled to the battery pack and (B) equipped with one or more alignment features dimensioned to facilitate aligning the set of electrical contacts with a counterpart set of electrical contacts incorporated in the device. Various other apparatuses, devices, systems, and methods are also disclosed.

## Description

### TECHNICAL FIELD

The present disclosure is generally directed to apparatuses, systems, and methods for aligning battery packs with electrical contacts in devices.

### BACKGROUND

Wearable devices often include and/or incorporate batteries that serve as power sources for powering onboard electronics and/or components. Wearable designers may face and/or encounter certain design constraints that influence various features and/or characteristics (e.g., the size, shape, and/or weight) of wearable devices. For example, to extend and/or increase the battery life of wearable devices, wearable designers may select and/or implement batteries that consume and/or occupy a significant amount of space within and/or on the wearable devices. However, to increase and/or improve comfort and/or usability, wearable designers may try to minimize and/or limit the size of the wearable devices. Unfortunately, one of the features that often adds significantly to the size and/or bulk of wearable devices may be batteries.

In some examples, devices that rely on and/or incorporate replaceable battery packs for power may last longer and/or have more prolonged lifespans than devices that rely on and/or incorporate permanent batteries. Additionally or alternatively, some governmental entities around the world may require that portable consumer devices (e.g., wearable devices, head-mounted displays, etc.) be equipped with replaceable battery packs. For one or more of these reasons, wearable designers may try to incorporate and/or integrate replaceable battery packs in wearable devices.

Unfortunately, some replaceable battery packs may be fitted with and/or in cumbersome or bulky enclosures that reduce the overall volumetric efficiency for sourcing power to portable consumer devices. For example, one battery integration technique may involve fixing batteries into molded plastic boxes and/or metal boxes for installation into corresponding devices and/or systems. The instant disclosure, therefore, identifies and addresses a need for additional and improved apparatuses, systems, and methods for aligning battery packs with electrical contacts in devices.

### SUMMARY

The present invention provides an apparatus, a system and a method for aligning battery packs with electrical contacts in devices as defined in the appended claims.

In accordance with a first aspect, there is provided an apparatus comprising:
a battery pack dimensioned for installation in a device;
a set of electrical contacts coupled to the battery pack; and
a plate that is:
   coupled to the battery pack; and
   equipped with one or more alignment features dimensioned to facilitate aligning the set of electrical contacts with a counterpart set of electrical contacts incorporated in the device.

The plate may be adhered to a side of the battery pack via an adhesive.

The adhesive may comprise double-sided tape.

The plate may be welded to a side of the battery pack.

The set of electrical contacts may be coupled to a first side of the battery pack; and
the plate may be coupled to a second side of the battery pack, wherein the first side and the second side may be positioned substantially perpendicular to one another.

The plate may extend outward beyond the first side of the battery pack in a direction substantially parallel with the second side of the battery pack.

The one or more alignment features may comprise a claw-shaped structure dimensioned to facilitate fastening the plate to the device.

The battery pack may comprise a metal housing having a cuboid shape.

The battery pack may comprise at least one side that measures 25 millimeters or less in length.

In accordance with a second aspect, there is provided a system comprising:
a device; and
a replaceable battery unit dimensioned for installation in the device, the replaceable battery unit comprising:
   a battery pack;
   a set of electrical contacts coupled to the battery pack; and
   a plate that is:
      coupled to the battery pack; and
      equipped with one or more alignment features dimensioned to facilitate aligning the set of electrical contacts with a counterpart set of electrical contacts incorporated in the device.

The plate may be adhered to a side of the battery pack via an adhesive.

The adhesive may comprise double-sided tape.

The plate may be welded to a side of the battery pack.

The set of electrical contacts may be coupled to a first side of the battery pack; and
the plate may be coupled to a second side of the battery pack, wherein the first side and the second side may be positioned substantially perpendicular to one another.

The plate may extend outward beyond the first side of the battery pack in a direction substantially parallel with the second side of the battery pack.

The one or more alignment features may comprise a claw-shaped structure dimensioned to facilitate fastening the plate to the device.

The battery pack may comprise a metal housing having a cuboid shape.

The battery pack may comprises at least one side that measures 25 millimeters or less in length.

The replacement battery unit may be configured to replace a different battery installed in the device.

In accordance with a third aspect, there is provided a method comprising:
coupling a set of electrical contacts to a battery pack dimensioned for installation in a device;
coupling, to the battery pack, a plate equipped with one or more alignment features; and
positioning the plate on the battery pack such that the one or more alignment features facilitate aligning the set of electrical contacts with a counterpart set of electrical contacts incorporated in the device.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

### BRIEF DESCRIPTION OF DRAWINGS

The accompanying drawings illustrate a number of exemplary embodiments and are parts of the specification. Together with the following description, the drawings demonstrate and explain various principles of the instant disclosure.
FIG. 1 is an illustration of an exemplary apparatus for aligning battery packs with electrical contacts in devices according to one or more embodiments of this disclosure.
FIG. 2 is an illustration of an exemplary replacement battery unit that facilitates aligning its electrical contacts for installation in a device according to one or more embodiments of this disclosure.
FIG. 3 is an illustration of an exemplary implementation of a replacement battery unit being installed and properly aligned in a device according to one or more embodiments of this disclosure.
FIG. 4 is an illustration of an exemplary system that includes a replacement battery unit installed and properly aligned in a device according to one or more embodiments of this disclosure.
FIG. 5 is a flowchart of an exemplary method for aligning battery packs with electrical contacts in devices according to one or more embodiments of this disclosure.
FIG. 6 is an illustration of exemplary augmented-reality glasses that may be used in connection with embodiments of this disclosure.
FIG. 7 is an illustration of an exemplary virtual-reality headset that may be used in connection with embodiments of this disclosure.
FIG. 8 is an illustration of exemplary haptic devices that may be used in connection with embodiments of this disclosure.
FIG. 9 is an illustration of an exemplary virtual-reality environment according to embodiments of this disclosure.
FIG. 10 is an illustration of an exemplary augmented-reality environment according to embodiments of this disclosure.

While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the instant disclosure covers all modifications, combinations, equivalents, and alternatives falling within this disclosure.

### DETAILED DESCRIPTION

The present disclosure is generally directed to apparatuses, systems, and methods for aligning battery packs with electrical contacts in devices. As will be explained in greater detail below, these apparatuses, systems, and methods may provide numerous features and benefits.

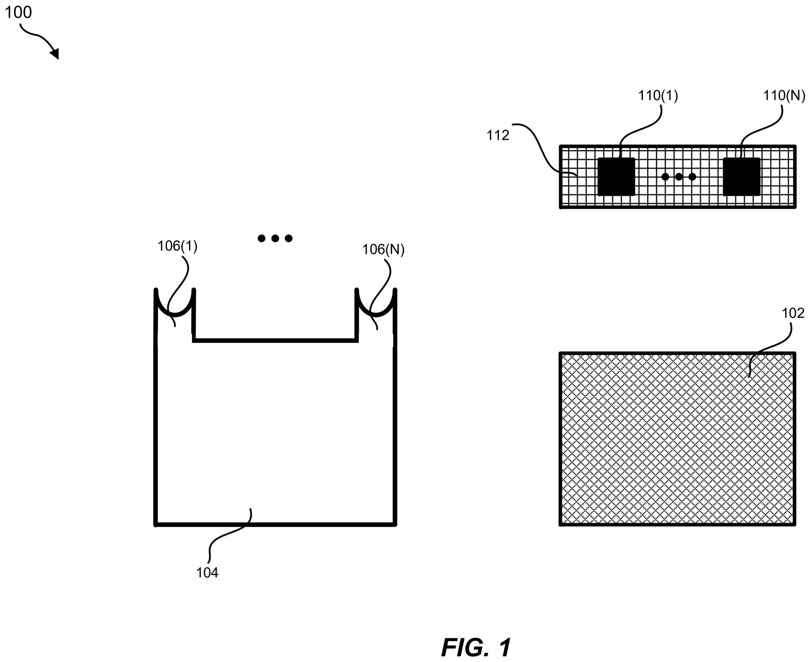

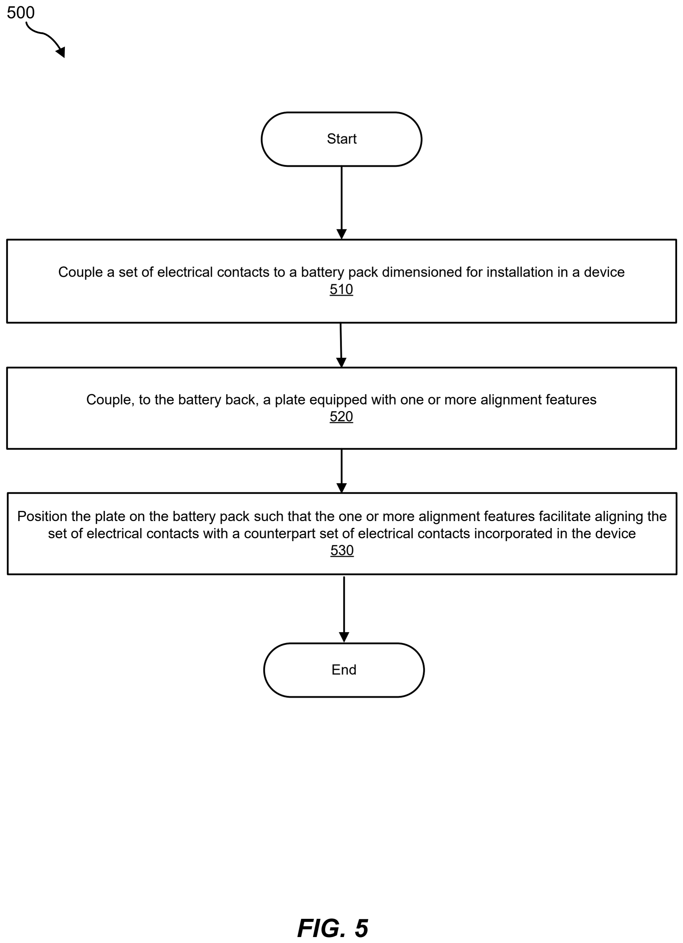

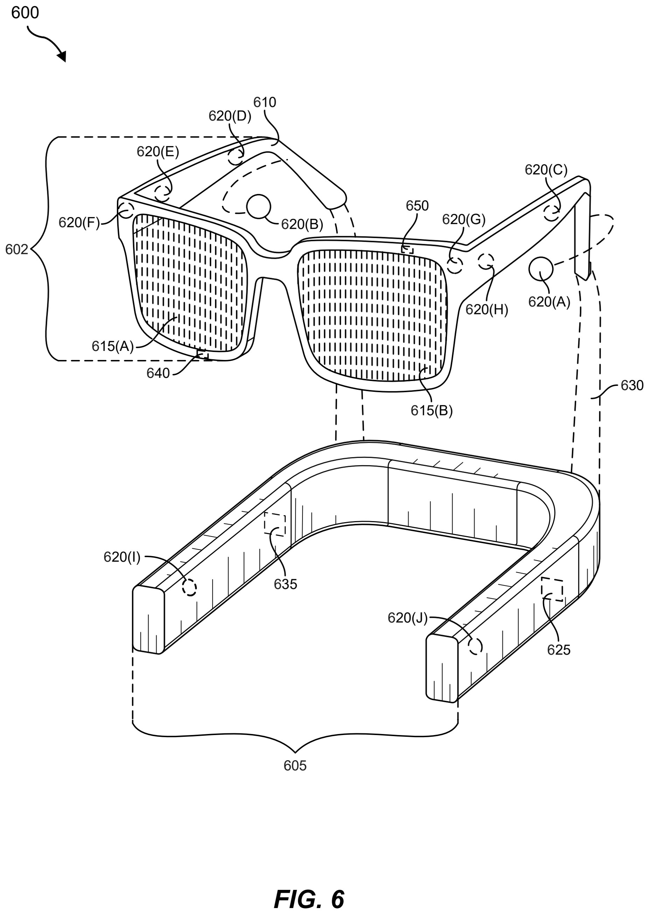

The following will provide, with reference to FIGS. 1-4, detailed descriptions of exemplary devices, systems, components, and corresponding implementations for aligning battery packs with electrical contacts in devices. In addition, detailed descriptions of methods for aligning battery packs with electrical contacts in devices will be provided in connection with FIG. 5. The discussion corresponding to FIGS. 6-10 will provide detailed descriptions of types of exemplary artificial-reality devices, wearables, and/or associated systems capable of aligning battery packs with electrical contacts in devices.

FIG. 1 illustrates a portion of an exemplary apparatus 100 for aligning battery packs with electrical contacts in devices. In some examples, apparatus 100 may include and/or represent a battery pack 102, a set of electrical contacts 110(1)-(N), and/or a plate 104. In one example, the set of electrical contacts 110(1)-(N) and plate 104 may be coupled, secured, and/or fixed to battery pack 102. In this example, battery pack 102 may be dimensioned, designed, and/or configured for installation in a device (e.g., a wearable device, a head-mounted display, etc.).

In some examples, plate 104 may be equipped, formed, and/or configured with one or more alignment features 106(1)-(N). In one example, alignment features 106(1)-(N) may be dimensioned, designed, and/or configured to facilitate, ensure, and/or support aligning the set of electrical contacts 110(1)-(N) with a counterpart set of electrical contacts incorporated in the device. For example, alignment features 106(1)-(N) may be positioned to ensure proper mating between the set of electrical contacts 110(1)-(N) and the counterpart set of electrical contacts upon installation of battery pack 102 (e.g., by a user, owner, and/or technician) into the device. Such installation may be performed by inserting, sliding, and/or pushing an assembled version of apparatus 100 into a battery housing of the device. In this example, proper mating may entail and/or involve electrical continuity between battery pack 102 and the device via the set of electrical contacts 110(1)-(N) and the counterpart set of electrical contacts. As a result, battery pack 102 may be able to source, provide, and/or transfer power and/or electric current to the device.

In some examples, the set of electrical contacts 110(1)-(N) may be disposed and/or arranged on a contact strip 112. In one example, contact strip 112 may be applied, secured, and/or fixed to battery pack 102, thereby positioning and/or coupling the set of electrical contacts 110(1)-(N) relative to battery pack 102 and/or counterpart electrical contacts in the device. In this example, contact strip 112 may be flexibly adhered and/or stuck to the battery pack 102 via an adhesive and/or film.

In some examples, battery pack 102 may include and/or represent any type or form of portable electric power source. In one example, battery pack 102 may include and/or represent electrochemical cells capable of sourcing and/or providing electric power or current to one or more circuits and/or devices. For example, battery pack 102 may include and/or represent a steel-can type of battery cell, module, and/or casing. Additionally or alternatively, battery pack 102 may include and/or represent a metal housing and/or casing formed into a certain shape (e.g., a cuboid, a cube, a prism, a cylinder, etc.). Examples of battery pack 102 include, without limitation, lithium-ion batteries, lithium-polymer batteries, primary lithium batteries, alkaline batteries, aluminum-ion batteries, rechargeable batteries, primary cell batteries, secondary cell batteries, flow batteries, metal-air batteries, nickel-cadmium batteries, nickel-metal hydride batteries, combinations or variations of one or more of the same, and/or any other suitable type of battery.

In some examples, plate 104 may include and/or represent any type of structure, base, and/or sheet capable of being coupled to battery packs and/or aligning battery packs with electrical contacts in devices. In one example, plate 104 may include and/or represent a piece of metal, plastic, composite, polymer, and/or one or more other materials formed and/or shaped into a structure capable of being adhered to battery packs and/or aligning battery packs with electrical contacts in devices via alignment features 106(1)-(N). Additionally or alternatively, plate 104 may constitute and/or represent a bespoke and/or customized shape that is designed specifically for a certain application and/or product.

In some examples, alignment features 106(1)-(N) may each include and/or represent any type or form of guide and/or mechanism that facilitates aligning battery packs with electrical contacts in devices. In one example, alignment features 106(1)-(N) may each include and/or represent a claw-shaped structure and/or guide dimensioned to facilitate fastening plate 104 and/or battery pack 102 to the device. In this example, alignment features 106(1)-(N) may each include and/or represent a fastener, latch, lock, female receptacle, male member, hook, bracket, and/or lever. Alignment features 106(1)-(N) may each be dimensioned, designed, and/or configured to interface and/or join with a counterpart alignment feature in the device to facilitate aligning battery pack 102 with electrical contacts in the device.

In some examples, alignment features 106(1)-(N) may include and/or represent the female side and/or part of a joint and/or guide mechanism, and the counterpart alignment features in the device may include and/or represent the male side and/or part. In other examples, alignment features 106(1)-(N) may include and/or represent the male side and/or part of a joint and/or guide mechanism, and the counterpart alignment features in the device may include and/or represent the female side and/or part.

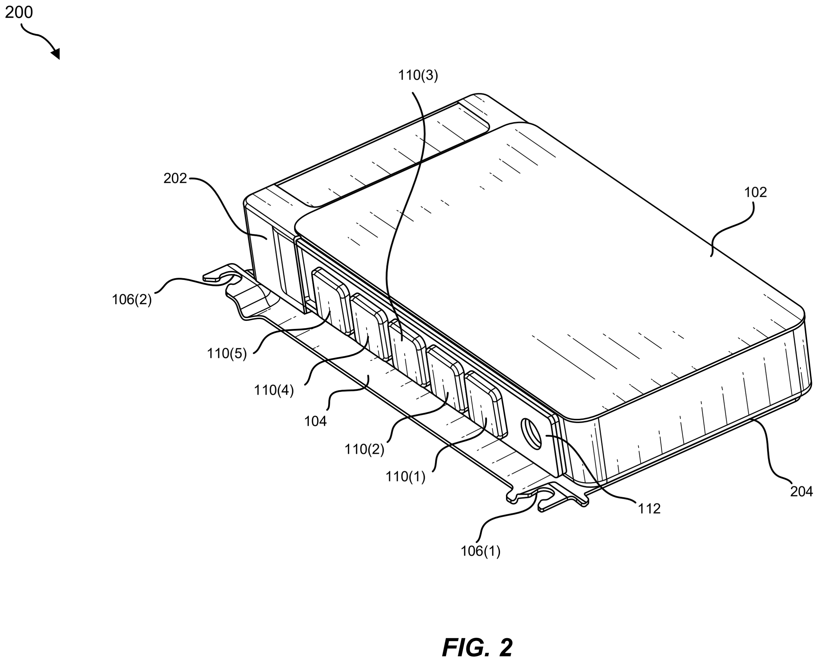

FIG. 2 illustrates an exemplary replaceable battery unit 200 that includes and/or represents an implementation of one or more components of apparatus 100. In some examples, replacement battery unit 200 in FIG. 2 may include and/or involve certain devices, components, configurations, and/or features that perform and/or provide functionalities that are similar and/or identical to those described above in connection with FIG. 1. As illustrated in FIG. 2, exemplary replaceable battery unit 200 may include and/or represent battery pack 102, plate 104, alignment features 106(1)-(2), contact strip 112, and/or electrical contacts 110(1), 110(2), 110(3), 110(4), and/or 110(5). In one example, electrical contacts 110(1)-(5) may be disposed and/or arranged on contact strip 112. In this example, contact strip 112 may be applied, secured, and/or fixed to battery pack 102, thereby positioning and/or coupling the set of electrical contacts 110(1)-(N) relative to battery pack 102 and/or counterpart electrical contacts in a device.

In some examples, plate 104 may be coupled, secured, and/or fixed to one or more sides of battery pack 102. In one example, plate 104 may be adhered and/or stuck to a side 204 of battery pack 102 via an adhesive (e.g., double-sided tape). In another example, plate 104 may be welded, bonded, and/or fused to side 204 of battery pack 102 via welding material. In certain implementations, contact strip 112 and/or electrical contacts 110(1)-(5) may be applied, coupled, and/or adhered to a side 202 of battery pack 102.

In some examples, side 202 and side 204 of battery pack 102 may be positioned substantially and/or completely perpendicular to one another. Additionally or alternatively, plate 104 may extend outward beyond side 202 of battery pack 102 in a direction substantially and/or completely parallel with side 204 of battery pack 102.

In some examples, electrical contacts 110(1)-(5) may facilitate, support, and/or carry electric current, signals, communications, and/or power between battery pack 102 and the device. In one example, electrical contacts 110(1)-(2) may include and/or represent positive and negative power terminals. Additionally or alternatively, electrical contacts 110(3)-(5) may include and/or represent data signals and/or a clock signal.

In some examples, side 202 of battery pack 102 may measure and/or extend 25 millimeters or less (e.g., 20 millimeters, 15 millimeters, 10 millimeters, etc.) in length. In other examples, side 204 of battery pack 102 may measure and/or extend 25 millimeters or less (e.g., 20 millimeters, 15 millimeters, 10 millimeters, etc.) in length.

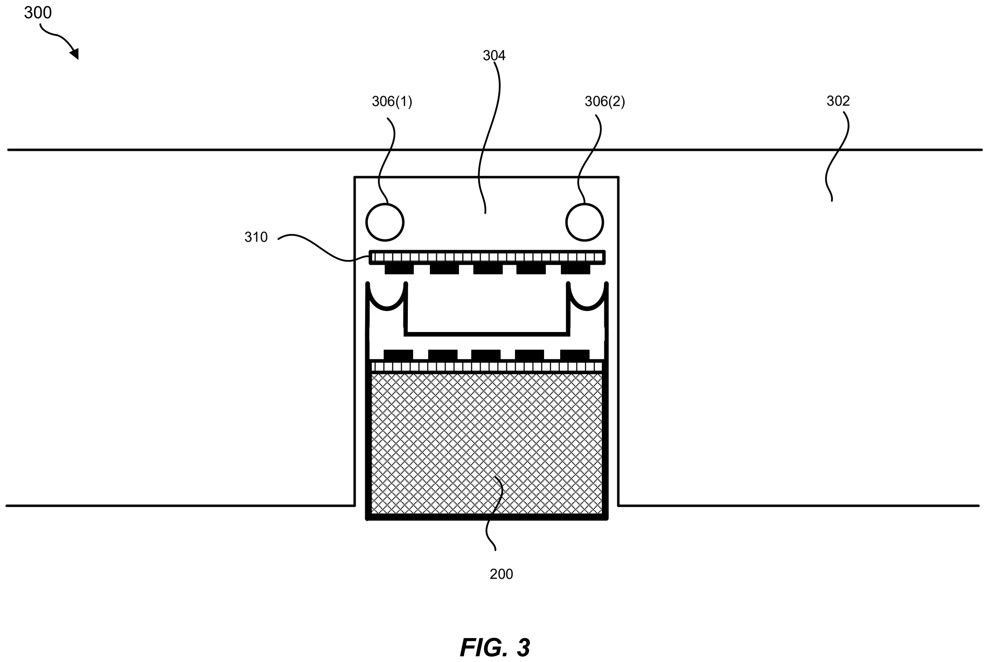

FIG. 3 illustrates an exemplary implementation 300 of replacement battery unit 200 installed in a device 302. In some examples, implementation 300 in FIG. 3 may include and/or involve certain devices, components, configurations, and/or features that perform and/or provide functionalities that are similar and/or identical to those described above in connection with either FIG. 1 or FIG. 2. As illustrated in FIG. 3, exemplary implementation 300 may involve and/or represent replaceable battery unit 200 being installed into a battery housing 304 of device 302. In one example, battery housing 304 of device 302 may be dimensioned, designed, and/or configured to accept, hold, and/or store replacement battery unit 200. Accordingly, battery housing 304 may facilitate and/or support an electrical interface between replacement battery unit 200 and device 302.

In some examples, battery housing 304 may be fitted and/or equipped with alignment features 306(1)-(2). In one example, alignment features 306(1)-(2) in battery housing 304 may be dimensioned, designed, and/or configured to interface and/or join with alignment features 106(1)-(2), respectively. In this example, during installation of replacement battery unit 200 into device 302, alignment features 106(1)-(2) and 306(1)-(2) may collectively facilitate and/or support aligning electrical contacts 110(1)-(5) of replaceable battery unit 200 with electrical contacts 310 in battery housing 304 of device 302. In certain implementations, battery housing 304 may be accessible, opened, and/or enclosed via a door and/or hatch on device 302. Additionally or alternatively, replacement battery unit 200 may replace a different battery that was previously installed in battery housing 304 of device 302.

In some examples, device 302 may include and/or represent any type or form of computing device and/or power-consuming device. For example, device 302 may include and/or represent a wearable is donned as part of an article of clothing, an accessory, and/or an implant. Examples of device 302 include, without limitation, head-mounted displays, smart glasses, power-consuming wristbands, armbands, pendants, bracelets, rings, jewelry, ankle bands, clothing, smartwatches, electronic textiles, shoes, clips, headbands, gloves, variations or combinations of one or more of the same, and/or any other suitable devices.

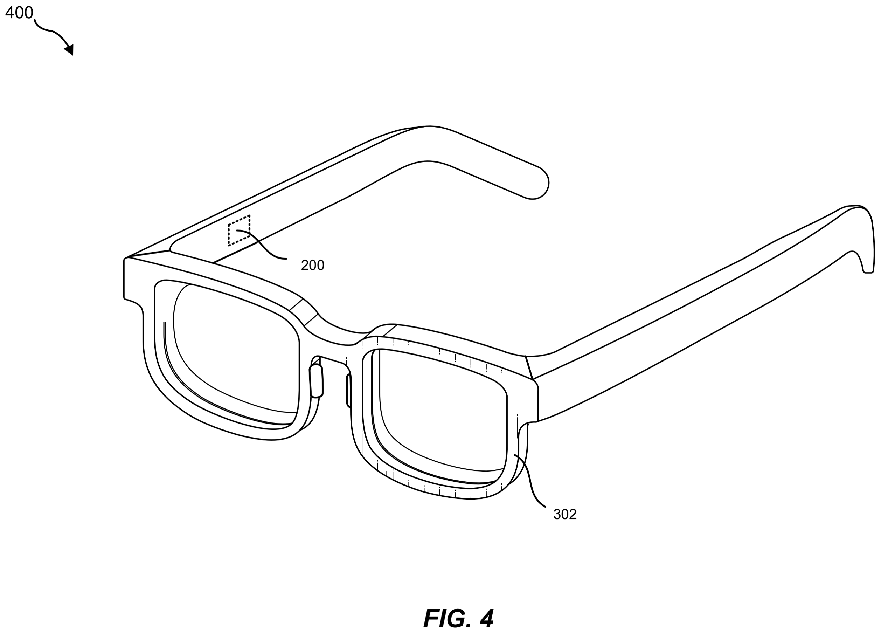

FIG. 4 illustrates an exemplary system 400 that includes and/or represents device 302 and/or replacement battery unit 200. In some examples, system 400 in FIG. 4 may include and/or involve certain devices, components, configurations, and/or features that perform and/or provide functionalities that are similar and/or identical to those described above in connection with any of FIGS. 1-3. As illustrated in FIG. 4, exemplary system 400 may involve replacement battery unit 200 installed and/or inserted into device 302, which enables device 302 to draw and/or consume power from replacement battery unit 200.

In some examples, the apparatuses and systems described in connection with FIGS. 1-4 may include and/or represent one or more additional devices, circuits, components, and/or features that are not necessarily illustrated and/or labeled in FIGS. 1 and 2. For example, the systems illustrated in FIGS. 3 and 4 may also include and/or represent additional network devices, computing devices, controllers, routers, switches, analog and/or digital circuitry, onboard logic, transistors, transmitters, receivers, transceivers, antennas, resistors, capacitors, diodes, inductors, switches, registers, flipflops, connections, traces, buses, semiconductor (e.g., silicon) devices and/or structures, processing devices, storage devices, circuit boards, sensors, packages, substrates, housings, combinations or variations of one or more of the same, and/or any other suitable components that facilitate and/or support self-contained reliability testing. In certain implementations, one or more of these additional devices, circuits, components, and/or features may be inserted and/or applied between any of the existing devices, circuits, components, and/or features illustrated in FIGS. 1-4 consistent with the aims and/or objectives described herein. Accordingly, the couplings and/or connections described with reference to FIGS. 1-4 may be direct connections with no intermediate components, devices, and/or nodes or indirect connections with one or more intermediate components, devices, and/or nodes.

In some examples, the phrase "to couple" and/or the term "coupling," as used herein, may refer to a direct connection and/or an indirect connection. For example, a direct coupling between two components may constitute and/or represent a coupling in which those two devices or components are directly connected to each other by a single node that provides continuity from one of those two devices or components to the other. In other words, the direct coupling may exclude and/or omit any additional devices or components between those two devices or components.

Additionally or alternatively, an indirect coupling between two devices and/or components may constitute and/or represent a coupling in which those two devices or components are indirectly connected to each other by multiple nodes that fail to provide direct electrical continuity from one of those two devices or components to the other. In other words, the indirect coupling may include and/or incorporate at least one additional device or component between those two devices or components.

FIG. 5 is a flow diagram of an exemplary method 500 for aligning battery packs with electrical contacts in devices. In one example, the steps shown in FIG. 5 may be performed during the manufacture and/or assembly of a replaceable battery unit. Additionally or alternatively, the steps shown in FIG. 5 may incorporate and/or involve various sub-steps and/or variations consistent with one or more of the descriptions provided above in connection with FIGS. 1-4.

As illustrated in FIG. 5, method 500 may include and/or involve the step of coupling a set of electrical contacts to a battery pack dimensioned for installation in a device (510). Step 510 may be performed in a variety of ways, including any of those described above in connection with FIGS. 1-4. For example, a battery manufacturer and/or contractor may couple a set of electrical contacts to a battery pack dimensioned for installation in a device.

In some examples, method 500 may also include and/or involve the step of coupling, to the battery pack, a plate equipped with one or more alignment features (520). Step 520 may be performed in a variety of ways, including any of those described above in connection with FIGS. 1-4. For example, the battery manufacturer and/or contractor may couple, to the battery pack, a plate equipped with one or more alignment features.

In some examples, method 500 may also include and/or involve the step of positioning the plate on the battery pack such that the one or more alignment features facilitate aligning the set of electrical contacts with a counterpart set of electrical contacts incorporated in the device (530). Step 530 may be performed in a variety of ways, including any of those described above in connection with FIGS. 1-4. For example, the battery manufacturer and/or contractor may position the plate on the battery pack such that the one or more alignment features facilitate aligning the set of electrical contacts with a counterpart set of electrical contacts incorporated in the device.

### Example Embodiments

Example 1: An apparatus comprising (1) a battery pack dimensioned for installation in a device, (2) a set of electrical contacts coupled to the battery pack, and (3) a plate that is (A) coupled to the battery pack and (B) equipped with one or more alignment features dimensioned to facilitate aligning the set of electrical contacts with a counterpart set of electrical contacts incorporated in the device.

Example 2: The apparatus of Example 1, wherein the plate is adhered to a side of the battery pack via an adhesive.

Example 3: The apparatus of Example 1 or Example 2, wherein the adhesive comprises double-sided tape.

Example 4: The apparatus of any of Examples 1-3, wherein the plate is welded to a side of the battery pack.

Example 5: The apparatus of any of Examples 1-4, wherein (1) the set of electrical contacts are coupled to a first side of the battery pack and (2) the plate is coupled to a second side of the battery pack, wherein the first side and the second side are positioned substantially perpendicular to one another.

Example 6: The apparatus of any of Examples 1-5, wherein the plate extends outward beyond the first side of the battery pack in a direction substantially parallel with the second side of the battery pack.

Example 7: The apparatus of any of Examples 1-6, wherein the one or more alignment features comprises a claw-shaped structure dimensioned to facilitate fastening the plate to the device.

Example 8: The apparatus of any of Examples 1-7, wherein the battery pack comprises a metal housing having a cuboid shape.

Example 9: The apparatus of any of Examples 1-8, wherein the battery pack comprises at least one side that measures 25 millimeters or less in length.

Example 10: A system comprising (1) a device; and (2) a replaceable battery unit dimensioned for installation in the device, the replaceable battery unit comprising (A) a battery pack, (B) a set of electrical contacts coupled to the battery pack, and (C) a plate that is (I) coupled to the battery pack and (II) equipped with one or more alignment features dimensioned to facilitate aligning the set of electrical contacts with a counterpart set of electrical contacts incorporated in the device.

Example 11: The system of Example 10, wherein the plate is adhered to a side of the battery pack via an adhesive.

Example 12: The system of Example 10 or Example 11, wherein the adhesive comprises double-sided tape.

Example 13: The system of any of Examples 10-12, wherein the plate is welded to a side of the battery pack.

Example 14: The system of any of Examples 10-13, wherein (1) the set of electrical contacts are coupled to a first side of the battery pack and (2) the plate is coupled to a second side of the battery pack, wherein the first side and the second side are positioned substantially perpendicular to one another.

Example 15: The system of any of Examples 10-14, wherein the plate extends outward beyond the first side of the battery pack in a direction substantially parallel with the second side of the battery pack.

Example 16: The system of any of Examples 10-15, wherein the one or more alignment features comprises a claw-shaped structure dimensioned to facilitate fastening the plate to the device.

Example 17: The system of any of Examples 10-16, wherein the battery pack comprises a metal housing having a cuboid shape.

Example 18: The system of any of Examples 10-17, wherein the battery pack comprises at least one side that measures 25 millimeters or less in length.

Example 19: The system of any of Examples 10-18, wherein the replacement battery unit is configured to replace a different battery installed in the device.

Example 20: A method comprising (1) coupling a set of electrical contacts to a battery pack dimensioned for installation in a device, (2) coupling, to the battery pack, a plate equipped with one or more alignment features, and (3) positioning the plate on the battery pack such that the one or more alignment features facilitate aligning the set of electrical contacts with a counterpart set of electrical contacts incorporated in the device.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

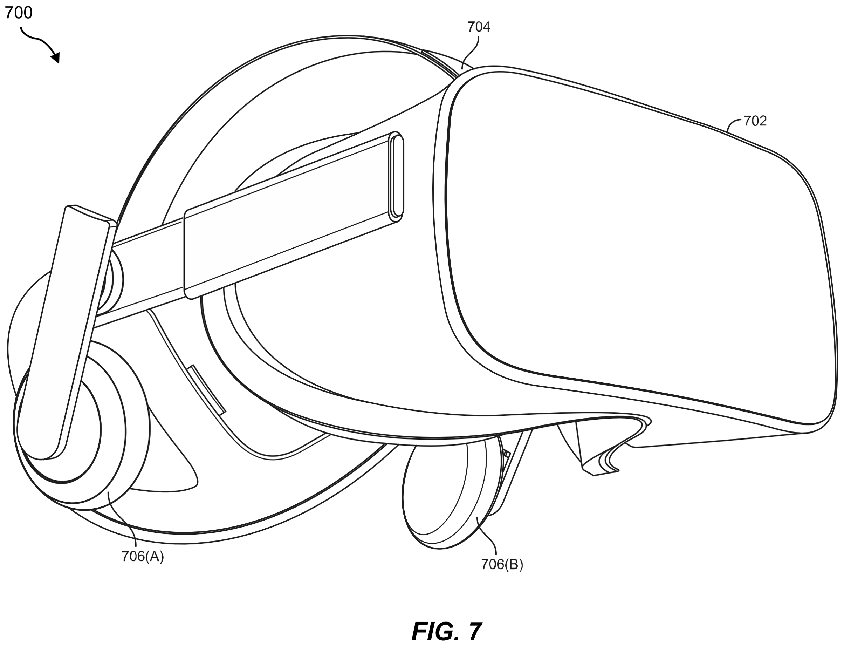

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 600 in FIG. 6) or that visually immerses a user in an artificial reality (such as, e.g., virtual-reality system 700 in FIG. 7). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 6, augmented-reality system 600 may include an eyewear device 602 with a frame 610 configured to hold a left display device 615(A) and a right display device 615(B) in front of a user's eyes. Display devices 615(A) and 615(B) may act together or independently to present an image or series of images to a user. While augmented-reality system 600 includes two displays, embodiments of this disclosure may be implemented in augmented-reality systems with a single NED or more than two NEDs.

In some embodiments, augmented-reality system 600 may include one or more sensors, such as sensor 640. Sensor 640 may generate measurement signals in response to motion of augmented-reality system 600 and may be located on substantially any portion of frame 610. Sensor 640 may represent one or more of a variety of different sensing mechanisms, such as a position sensor, an inertial measurement unit (IMU), a depth camera assembly, a structured light emitter and/or detector, or any combination thereof. In some embodiments, augmented-reality system 600 may or may not include sensor 640 or may include more than one sensor. In embodiments in which sensor 640 includes an IMU, the IMU may generate calibration data based on measurement signals from sensor 640. Examples of sensor 640 may include, without limitation, accelerometers, gyroscopes, magnetometers, other suitable types of sensors that detect motion, sensors used for error correction of the IMU, or some combination thereof.

In some examples, augmented-reality system 600 may also include a microphone array with a plurality of acoustic transducers 620(A)-620(J), referred to collectively as acoustic transducers 620. Acoustic transducers 620 may represent transducers that detect air pressure variations induced by sound waves. Each acoustic transducer 620 may be configured to detect sound and convert the detected sound into an electronic format (e.g., an analog or digital format). The microphone array in FIG. 6 may include, for example, ten acoustic transducers: 620(A) and 620(B), which may be designed to be placed inside a corresponding ear of the user, acoustic transducers 620(C), 620(D), 620(E), 620(F), 620(G), and 620(H), which may be positioned at various locations on frame 610, and/or acoustic transducers 620(I) and 620(J), which may be positioned on a corresponding neckband 605.

In some embodiments, one or more of acoustic transducers 620(A)-(J) may be used as output transducers (e.g., speakers). For example, acoustic transducers 620(A) and/or 620(B) may be earbuds or any other suitable type of headphone or speaker.

The configuration of acoustic transducers 620 of the microphone array may vary. While augmented-reality system 600 is shown in FIG. 6 as having ten acoustic transducers 620, the number of acoustic transducers 620 may be greater or less than ten. In some embodiments, using higher numbers of acoustic transducers 620 may increase the amount of audio information collected and/or the sensitivity and accuracy of the audio information. In contrast, using a lower number of acoustic transducers 620 may decrease the computing power required by an associated controller 650 to process the collected audio information. In addition, the position of each acoustic transducer 620 of the microphone array may vary. For example, the position of an acoustic transducer 620 may include a defined position on the user, a defined coordinate on frame 610, an orientation associated with each acoustic transducer 620, or some combination thereof.

Acoustic transducers 620(A) and 620(B) may be positioned on different parts of the user's ear, such as behind the pinna, behind the tragus, and/or within the auricle or fossa. Or, there may be additional acoustic transducers 620 on or surrounding the ear in addition to acoustic transducers 620 inside the ear canal. Having an acoustic transducer 620 positioned next to an ear canal of a user may enable the microphone array to collect information on how sounds arrive at the ear canal. By positioning at least two of acoustic transducers 620 on either side of a user's head (e.g., as binaural microphones), augmented-reality system 600 may simulate binaural hearing and capture a 3D stereo sound field around about a user's head. In some embodiments, acoustic transducers 620(A) and 620(B) may be connected to augmented-reality system 600 via a wired connection 630, and in other embodiments acoustic transducers 620(A) and 620(B) may be connected to augmented-reality system 600 via a wireless connection (e.g., a BLUETOOTH connection). In still other embodiments, acoustic transducers 620(A) and 620(B) may not be used at all in conjunction with augmented-reality system 600.

Acoustic transducers 620 on frame 610 may be positioned in a variety of different ways, including along the length of the temples, across the bridge, above or below display devices 615(A) and 615(B), or some combination thereof. Acoustic transducers 620 may also be oriented such that the microphone array is able to detect sounds in a wide range of directions surrounding the user wearing the augmented-reality system 600. In some embodiments, an optimization process may be performed during manufacturing of augmented-reality system 600 to determine relative positioning of each acoustic transducer 620 in the microphone array.

In some examples, augmented-reality system 600 may include or be connected to an external device (e.g., a paired device), such as neckband 605. Neckband 605 generally represents any type or form of paired device. Thus, the following discussion of neckband 605 may also apply to various other paired devices, such as charging cases, smart watches, smart phones, wrist bands, other wearable devices, hand-held controllers, tablet computers, laptop computers, other external compute devices, etc.

As shown, neckband 605 may be coupled to eyewear device 602 via one or more connectors. The connectors may be wired or wireless and may include electrical and/or non-electrical (e.g., structural) components. In some cases, eyewear device 602 and neckband 605 may operate independently without any wired or wireless connection between them. While FIG. 6 illustrates the components of eyewear device 602 and neckband 605 in example locations on eyewear device 602 and neckband 605, the components may be located elsewhere and/or distributed differently on eyewear device 602 and/or neckband 605. In some embodiments, the components of eyewear device 602 and neckband 605 may be located on one or more additional peripheral devices paired with eyewear device 602, neckband 605, or some combination thereof.

Pairing external devices, such as neckband 605, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 600 may be provided by a paired device or shared between a paired device and an eyewear device, thus reducing the weight, heat profile, and form factor of the eyewear device overall while still retaining desired functionality. For example, neckband 605 may allow components that would otherwise be included on an eyewear device to be included in neckband 605 since users may tolerate a heavier weight load on their shoulders than they would tolerate on their heads. Neckband 605 may also have a larger surface area over which to diffuse and disperse heat to the ambient environment. Thus, neckband 605 may allow for greater battery and computation capacity than might otherwise have been possible on a standalone eyewear device. Since weight carried in neckband 605 may be less invasive to a user than weight carried in eyewear device 602, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 605 may be communicatively coupled with eyewear device 602 and/or to other devices. These other devices may provide certain functions (e.g., tracking, localizing, depth mapping, processing, storage, etc.) to augmented-reality system 600. In the embodiment of FIG. 6, neckband 605 may include two acoustic transducers (e.g., 620(I) and 620(J)) that are part of the microphone array (or potentially form their own microphone subarray). Neckband 605 may also include a controller 625 and a power source 635.

Acoustic transducers 620(I) and 620(J) of neckband 605 may be configured to detect sound and convert the detected sound into an electronic format (analog or digital). In the embodiment of FIG. 6, acoustic transducers 620(I) and 620(J) may be positioned on neckband 605, thereby increasing the distance between the neckband acoustic transducers 620(I) and 620(J) and other acoustic transducers 620 positioned on eyewear device 602. In some cases, increasing the distance between acoustic transducers 620 of the microphone array may improve the accuracy of beamforming performed via the microphone array. For example, if a sound is detected by acoustic transducers 620(C) and 620(D) and the distance between acoustic transducers 620(C) and 620(D) is greater than, e.g., the distance between acoustic transducers 620(D) and 620(E), the determined source location of the detected sound may be more accurate than if the sound had been detected by acoustic transducers 620(D) and 620(E).

Controller 625 of neckband 605 may process information generated by the sensors on neckband 605 and/or augmented-reality system 600. For example, controller 625 may process information from the microphone array that describes sounds detected by the microphone array. For each detected sound, controller 625 may perform a direction-of-arrival (DOA) estimation to estimate a direction from which the detected sound arrived at the microphone array. As the microphone array detects sounds, controller 625 may populate an audio data set with the information. In embodiments in which augmented-reality system 600 includes an inertial measurement unit, controller 625 may compute all inertial and spatial calculations from the IMU located on eyewear device 602. A connector may convey information between augmented-reality system 600 and neckband 605 and between augmented-reality system 600 and controller 625. The information may be in the form of optical data, electrical data, wireless data, or any other transmittable data form. Moving the processing of information generated by augmented-reality system 600 to neckband 605 may reduce weight and heat in eyewear device 602, making it more comfortable to the user.

Power source 635 in neckband 605 may provide power to eyewear device 602 and/or to neckband 605. Power source 635 may include, without limitation, lithium ion batteries, lithium-polymer batteries, primary lithium batteries, alkaline batteries, or any other form of power storage. In some cases, power source 635 may be a wired power source. Including power source 635 on neckband 605 instead of on eyewear device 602 may help better distribute the weight and heat generated by power source 635.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 700 in FIG. 7, that mostly or completely covers a user's field of view. Virtual-reality system 700 may include a front rigid body 702 and a band 704 shaped to fit around a user's head. Virtual-reality system 700 may also include output audio transducers 706(A) and 706(B). Furthermore, while not shown in FIG. 7, front rigid body 702 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 600 and/or virtual-reality system 700 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 600 and/or virtual-reality system 700 may include microLED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 600 and/or virtual-reality system 700 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

As noted, artificial-reality systems 600 and 700 may be used with a variety of other types of devices to provide a more compelling artificial-reality experience. These devices may be haptic interfaces with transducers that provide haptic feedback and/or that collect haptic information about a user's interaction with an environment. The artificial-reality systems disclosed herein may include various types of haptic interfaces that detect or convey various types of haptic information, including tactile feedback (e.g., feedback that a user detects via nerves in the skin, which may also be referred to as cutaneous feedback) and/or kinesthetic feedback (e.g., feedback that a user detects via receptors located in muscles, joints, and/or tendons).

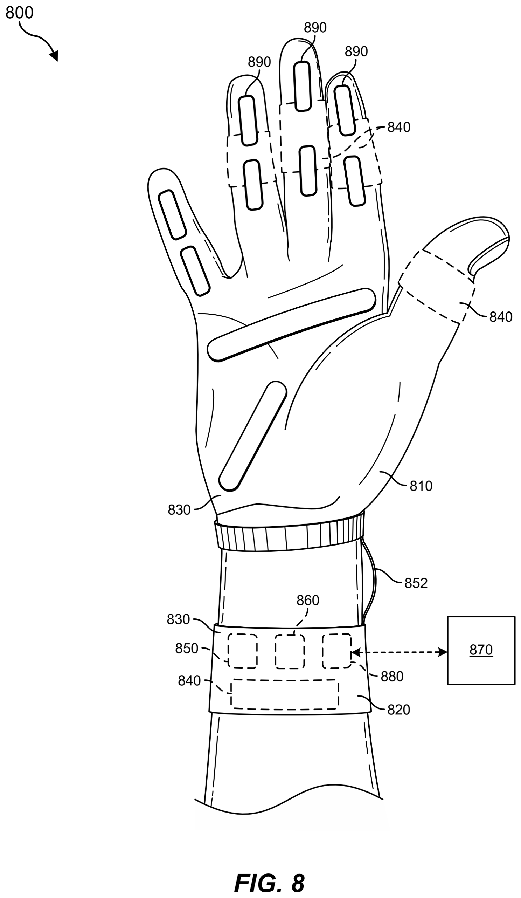

Haptic feedback may be provided by interfaces positioned within a user's environment (e.g., chairs, tables, floors, etc.) and/or interfaces on articles that may be worn or carried by a user (e.g., gloves, wristbands, etc.). As an example, FIG. 8 illustrates a vibrotactile system 800 in the form of a wearable glove (haptic device 810) and wristband (haptic device 820). Haptic device 810 and haptic device 820 are shown as examples of wearable devices that include a flexible, wearable textile material 830 that is shaped and configured for positioning against a user's hand and wrist, respectively. This disclosure also includes vibrotactile systems that may be shaped and configured for positioning against other human body parts, such as a finger, an arm, a head, a torso, a foot, or a leg. By way of example and not limitation, vibrotactile systems according to various embodiments of the present disclosure may also be in the form of a glove, a headband, an armband, a sleeve, a head covering, a sock, a shirt, or pants, among other possibilities. In some examples, the term "textile" may include any flexible, wearable material, including woven fabric, non-woven fabric, leather, cloth, a flexible polymer material, composite materials, etc.

One or more vibrotactile devices 840 may be positioned at least partially within one or more corresponding pockets formed in textile material 830 of vibrotactile system 800. Vibrotactile devices 840 may be positioned in locations to provide a vibrating sensation (e.g., haptic feedback) to a user of vibrotactile system 800. For example, vibrotactile devices 840 may be positioned against the user's finger(s), thumb, or wrist, as shown in FIG. 8. Vibrotactile devices 840 may, in some examples, be sufficiently flexible to conform to or bend with the user's corresponding body part(s).

A power source 850 (e.g., a battery) for applying a voltage to the vibrotactile devices 840 for activation thereof may be electrically coupled to vibrotactile devices 840, such as via conductive wiring 852. In some examples, each of vibrotactile devices 840 may be independently electrically coupled to power source 850 for individual activation. In some embodiments, a processor 860 may be operatively coupled to power source 850 and configured (e.g., programmed) to control activation of vibrotactile devices 840.

Vibrotactile system 800 may be implemented in a variety of ways. In some examples, vibrotactile system 800 may be a standalone system with integral subsystems and components for operation independent of other devices and systems. As another example, vibrotactile system 800 may be configured for interaction with another device or system 870. For example, vibrotactile system 800 may, in some examples, include a communications interface 880 for receiving and/or sending signals to the other device or system 870. The other device or system 870 may be a mobile device, a gaming console, an artificial-reality (e.g., virtual-reality, augmented-reality, mixed-reality) device, a personal computer, a tablet computer, a network device (e.g., a modem, a router, etc.), a handheld controller, etc. Communications interface 880 may enable communications between vibrotactile system 800 and the other device or system 870 via a wireless (e.g., Wi-Fi, BLUETOOTH, cellular, radio, etc.) link or a wired link. If present, communications interface 880 may be in communication with processor 860, such as to provide a signal to processor 860 to activate or deactivate one or more of the vibrotactile devices 840.

Vibrotactile system 800 may optionally include other subsystems and components, such as touch-sensitive pads 890, pressure sensors, motion sensors, position sensors, lighting elements, and/or user interface elements (e.g., an on/off button, a vibration control element, etc.). During use, vibrotactile devices 840 may be configured to be activated for a variety of different reasons, such as in response to the user's interaction with user interface elements, a signal from the motion or position sensors, a signal from the touch-sensitive pads 890, a signal from the pressure sensors, a signal from the other device or system 870, etc.

Although power source 850, processor 860, and communications interface 880 are illustrated in FIG. 8 as being positioned in haptic device 820, the present disclosure is not so limited. For example, one or more of power source 850, processor 860, or communications interface 880 may be positioned within haptic device 810 or within another wearable textile.

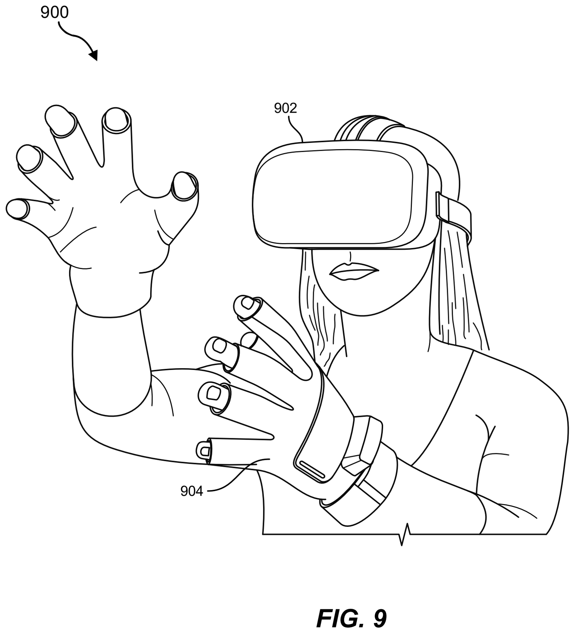

Haptic wearables, such as those shown in and described in connection with FIG. 8, may be implemented in a variety of types of artificial-reality systems and environments. FIG. 9 shows an example artificial-reality environment 900 including one head-mounted virtual-reality display and two haptic devices (i.e., gloves), and in other embodiments any number and/or combination of these components and other components may be included in an artificial-reality system. For example, in some embodiments there may be multiple head-mounted displays each having an associated haptic device, with each head-mounted display and each haptic device communicating with the same console, portable computing device, or other computing system.

Head-mounted display 902 generally represents any type or form of virtual-reality system, such as virtual-reality system 700 in FIG. 7. Haptic device 904 generally represents any type or form of wearable device, worn by a user of an artificial-reality system, that provides haptic feedback to the user to give the user the perception that he or she is physically engaging with a virtual object. In some embodiments, haptic device 904 may provide haptic feedback by applying vibration, motion, and/or force to the user. For example, haptic device 904 may limit or augment a user's movement. To give a specific example, haptic device 904 may limit a user's hand from moving forward so that the user has the perception that his or her hand has come in physical contact with a virtual wall. In this specific example, one or more actuators within the haptic device may achieve the physical-movement restriction by pumping fluid into an inflatable bladder of the haptic device. In some examples, a user may also use haptic device 904 to send action requests to a console. Examples of action requests include, without limitation, requests to start an application and/or end the application and/or requests to perform a particular action within the application.

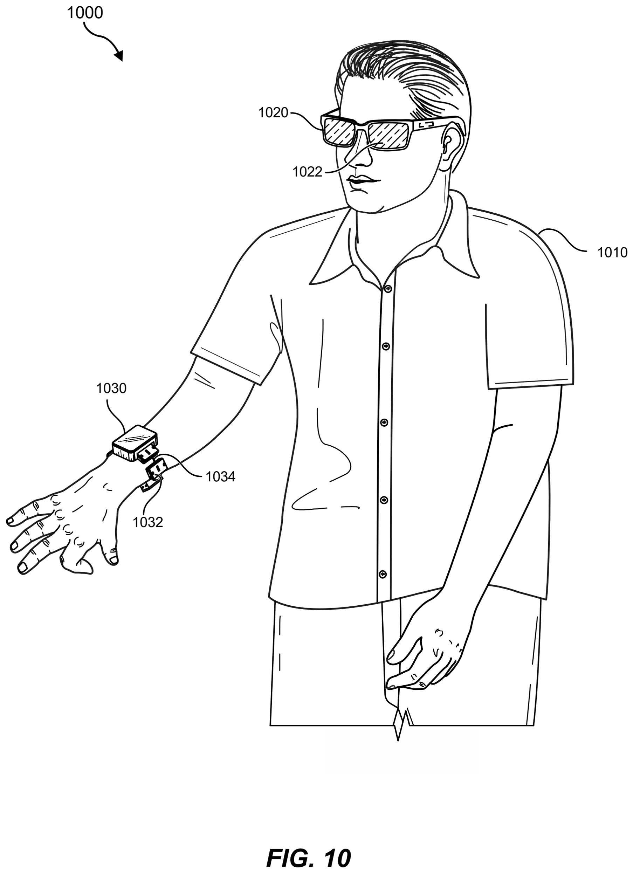

While haptic interfaces may be used with virtual-reality systems, as shown in FIG. 9, haptic interfaces may also be used with augmented-reality systems, as shown in FIG. 10. FIG. 10 is a perspective view of a user 1010 interacting with an augmented-reality system 1000. In this example, user 1010 may wear a pair of augmented-reality glasses 1020 that may have one or more displays 1022 and that are paired with a haptic device 1030. In this example, haptic device 1030 may be a wristband that includes a plurality of band elements 1032 and a tensioning mechanism 1034 that connects band elements 1032 to one another.

One or more of band elements 1032 may include any type or form of actuator suitable for providing haptic feedback. For example, one or more of band elements 1032 may be configured to provide one or more of various types of cutaneous feedback, including vibration, force, traction, texture, and/or temperature. To provide such feedback, band elements 1032 may include one or more of various types of actuators. In one example, each of band elements 1032 may include a vibrotactor (e.g., a vibrotactile actuator) configured to vibrate in unison or independently to provide one or more of various types of haptic sensations to a user. Alternatively, only a single band element or a subset of band elements may include vibrotactors.

Haptic devices 810, 820, 904, and 1030 may include any suitable number and/or type of haptic transducer, sensor, and/or feedback mechanism. For example, haptic devices 810, 820, 904, and 1030 may include one or more mechanical transducers, piezoelectric transducers, and/or fluidic transducers. Haptic devices 810, 820, 904, and 1030 may also include various combinations of different types and forms of transducers that work together or independently to enhance a user's artificial-reality experience. In one example, each of band elements 1032 of haptic device 1030 may include a vibrotactor (e.g., a vibrotactile actuator) configured to vibrate in unison or independently to provide one or more of various types of haptic sensations to a user.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the present invention as defined in the appended claims. The embodiments disclosed herein should be considered in all respects illustrative and not restrictive. Reference should be made to any claims appended hereto in determining the scope of the present invention.

Unless otherwise noted, the terms "connected to" and "coupled to" (and their derivatives), as used in the specification and/or claims, are to be construed as permitting both direct and indirect (i.e., via other elements or components) connection. In addition, the terms "a" or "an," as used in the specification and/or claims, are to be construed as meaning "at least one of." Finally, for ease of use, the terms "including" and "having" (and their derivatives), as used in the specification and/or claims, are interchangeable with and have the same meaning as the word "comprising."

## Claims

1. An apparatus comprising:
a battery pack dimensioned for installation in a device;
a set of electrical contacts coupled to the battery pack; and
a plate that is:
coupled to the battery pack; and
equipped with one or more alignment features dimensioned to facilitate aligning the set of electrical contacts with a counterpart set of electrical contacts incorporated in the device.

2. The apparatus of claim 1, wherein the plate is adhered to a side of the battery pack via an adhesive;
optionally, wherein the adhesive comprises double-sided tape.

3. The apparatus of claim 1 or claim 2, wherein the plate is welded to a side of the battery pack.

4. The apparatus of any preceding claim, wherein:
the set of electrical contacts are coupled to a first side of the battery pack; and
the plate is coupled to a second side of the battery pack, wherein the first side and the second side are positioned substantially perpendicular to one another;
optionally, wherein the plate extends outward beyond the first side of the battery pack in a direction substantially parallel with the second side of the battery pack.

5. The apparatus of any preceding claim, wherein the one or more alignment features comprises a claw-shaped structure dimensioned to facilitate fastening the plate to the device.

6. The apparatus of any preceding claim, wherein the battery pack comprises a metal housing having a cuboid shape.

7. The apparatus of any preceding claim, wherein the battery pack comprises at least one side that measures 25 millimeters or less in length.

8. A system comprising:
a device; and
a replaceable battery unit dimensioned for installation in the device, the replaceable battery unit comprising:
a battery pack;
a set of electrical contacts coupled to the battery pack; and
a plate that is:
coupled to the battery pack; and
equipped with one or more alignment features dimensioned to facilitate aligning the set of electrical contacts with a counterpart set of electrical contacts incorporated in the device.

9. The system of claim 8, wherein the plate is adhered to a side of the battery pack via an adhesive;
optionally, wherein the adhesive comprises double-sided tape.

10. The system of claim 8 or claim 9, wherein the plate is welded to a side of the battery pack.

11. The system of any one of claims 8 to 10, wherein:
the set of electrical contacts are coupled to a first side of the battery pack; and
the plate is coupled to a second side of the battery pack, wherein the first side and the second side are positioned substantially perpendicular to one another;
optionally, wherein the plate extends outward beyond the first side of the battery pack in a direction substantially parallel with the second side of the battery pack.

12. The system of any one of claims 8 to 11, and one or more of the following:
(i) wherein the one or more alignment features comprises a claw-shaped structure dimensioned to facilitate fastening the plate to the device;
(ii) wherein the battery pack comprises a metal housing having a cuboid shape.

13. The system of any one of claims 8 to 12, wherein the battery pack comprises at least one side that measures 25 millimeters or less in length.

14. The system of any one of claims 8 to 13, wherein the replacement battery unit is configured to replace a different battery installed in the device.

15. A method comprising:
coupling a set of electrical contacts to a battery pack dimensioned for installation in a device;
coupling, to the battery pack, a plate equipped with one or more alignment features; and
positioning the plate on the battery pack such that the one or more alignment features facilitate aligning the set of electrical contacts with a counterpart set of electrical contacts incorporated in the device.
